# EUROPÄISCHE PATENTSCHRIFT

(11) **EP 3 413 155 B1**
(45) Veröffentlichungstag und Bekanntmachung des Hinweises auf die Patenterteilung: **26.02.2020**
(21) Anmeldenummer: 17175376.7
(22) Anmeldetag: 09.06.2017
(51) Int. Cl.: G05D 1/02, A01D 34/00, G05D 1/00, G06T 7/73, G06T 7/13

(54) **VERFAHREN ZUM ERFASSEN MINDESTENS EINES ABSCHNITTS EINES BEGRENZUNGSRANDS EINER ZU BEARBEITENDEN FLÄCHE, VERFAHREN ZUM BETREIBEN EINES AUTONOMEN MOBILEN GRÜNFLÄCHENBEARBEITUNGSROBOTERS, ERFASSUNGSSYSTEM UND GRÜNFLÄCHENBEARBEITUNGSSYSTEM**
METHOD FOR THE DETECTION OF AT LEAST ONE SECTION OF A LIMITING EDGE OF A SURFACE TO BE PROCESSED, METHOD FOR OPERATING AN AUTONOMOUS MOBILE GREEN AREA PROCESSING ROBOT, DETECTION SYSTEM AND GREEN AREA PROCESSING SYSTEM
PROCÉDÉ DE DÉTECTION D'AU MOINS UNE SECTION D'UN BORD DE LIMITATION D'UNE SURFACE À TRAVAILLER, PROCÉDÉ DE FONCTIONNEMENT D'UN ROBOT DE TRAITEMENT D'ESPACE VERT AUTONOME MOBILE, SYSTÈME DE DÉTECTION ET SYSTÈME DE TRAITEMENT D'ESPACE VERT

(43) Veröffentlichungstag der Anmeldung: 12.12.2018
(73) Patentinhaber: Andreas Stihl AG & Co. KG, 71336 Waiblingen (DE)
(72) Erfinder: Reinert, Michael, 73635 Rudersberg (DE); Strohmaier, Andreas, 71554 Weissach im Tal (DE); Zöttl, Samuel, 6092 Birgitz (AT)
(74) Vertreter: Patentanwälte Ruff, Wilhelm, Beier, Dauster & Partner mbB

(56) Entgegenhaltungen:
- EP-A1- 2 684 438
- WO-A1-2017/092904
- JP-A- 2013 020 543
- US-A1- 2013 282 224

## Beschreibung

### ANWENDUNGSGEBIET UND STAND DER TECHNIK

Die Erfindung bezieht sich auf ein Verfahren zum Erfassen mindestens eines Abschnitts eines Begrenzungsrands einer zu bearbeitenden Fläche, ein Verfahren zum Betreiben eines autonomen mobilen Grünflächenbearbeitungsroboters auf der zu bearbeitenden Fläche, ein Erfassungssystem und ein Grünflächenbearbeitungssystem mit einem solchen Erfassungssystem und einem autonomen mobilen Grünflächenbearbeitungsroboter.

Ein Verfahren zum Erfassen mindestens eines Abschnitts eines Begrenzungsrands einer zu bearbeitenden Fläche, ein Verfahren zum Betreiben eines autonomen mobilen Grünflächenbearbeitungsroboters auf einer zu bearbeitenden Fläche mit einem Begrenzungsrand, ein Erfassungssystem und ein Grünflächenbearbeitungssystem mit einem solchen Erfassungssystem und einem autonomen mobilen Grünflächenbearbeitungsroboter sind bekannt.

### AUFGABE UND LÖSUNG

Der Erfindung liegt als Aufgabe die Bereitstellung eines Verfahrens zum Erfassen mindestens eines Abschnitts eines Begrenzungsrands einer zu bearbeitenden Fläche zugrunde, das benutzerfreundlich ist. Des Weiteren liegt der Erfindung als Aufgabe die Bereitstellung eines Verfahrens zum Betreiben eines autonomen mobilen Grünflächenbearbeitungsroboters auf einer zu bearbeitenden Fläche mit einem Begrenzungsrand, eines Erfassungssystems und eines Grünflächenbearbeitungssystems zugrunde.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein Verfahren mit den Merkmalen des Anspruchs 6, ein Erfassungssystem mit den Merkmalen des Anspruchs 8 und ein Grünflächenbearbeitungssystem mit den Merkmalen des Anspruchs 11 gelöst. Vorteilhafte Weiterbildungen und/oder Ausgestaltungen der Erfindung sind in den abhängigen Ansprüchen beschrieben.

Das erfindungsgemäße Verfahren zum Erfassen mindestens eines Abschnitts eines Begrenzungsrands einer, insbesondere von einem autonomen mobilen Grünflächenbearbeitungsroboter, zu bearbeitenden Fläche weist die Schritte auf: a) Aufnehmen, insbesondere automatisches Aufnehmen, von Live-Bildern mittels einer Kamera. b) Überlagern, insbesondere automatisches Überlagern, der aufgenommenen Live-Bilder mit einem Zielsymbol und Anzeigen, insbesondere automatisches Anzeigen, der mit dem Zielsymbol überlagerten Live-Bilder. c) Anvisieren des Abschnitts mit dem Zielsymbol und Führen des Zielsymbols entlang des Abschnitts mittels Ausrichten der Kamera, insbesondere durch einen Benutzer. d) Aufnehmen, insbesondere automatisches Aufnehmen, einer Abfolge von Bildern des Abschnitts mittels der Kamera während des Führens. e) Kennzeichnen, insbesondere automatisches Kennzeichnen, in einem jeweiligen Bild der aufgenommenen Abfolge von Bildern eines mit dem Zielsymbol referenzierten Bildpunkts als Begrenzungsrandbildpunkt. f) Ermitteln und/oder Bestimmen, insbesondere automatisches Ermitteln, einer Abfolge von Positionskoordinaten des Abschnitts des Begrenzungsrands basierend auf den Begrenzungsrandbildpunkten.

Das Verfahren ermöglicht die Abfolge von Positionskoordinaten des Abschnitts des Begrenzungsrands der Fläche auf benutzerfreundliche Weise zu erfassen. Der Ablauf des Verfahrens kann relativ einfach zu verstehen sein, relativ wenig Zeit des Benutzers und kaum oder keine physische Arbeit des Benutzers erfordern.

Die Fläche kann beispielsweise eine Freifläche, insbesondere ein unversiegelter Boden, oder eine Grünfläche sein, wie eine Wiese mit Rasen. Der Begrenzungsrand kann durch einen Zaun, eine Wand, einen Weg, eine Terrasse, eine Hecke, ein Beet, einen Teich, einen Geländeübergang, eine Markierung und/oder auf eine andere Art und Weise definiert oder vorgegeben sein.

Vorteilhafterweise kann die Kamera eine Digitalkamera sein.

Die Schritte a) und b) können als Live-View-Modus und/oder Live-Preview-Modus bezeichnet werden. Dabei können die Live-Bilder in Echtzeit mit dem Zielsymbol überlagert und angezeigt werden. In anderen Worten: die Schritte a) und b) können zeitgleich ausgeführt werden, vorteilhafterweise mehrfach wiederholt werden. Das Zielsymbol kann als Fadenkreuz bezeichnet werden.

Die Schritte a) und b) ermöglichen das Anvisieren des Abschnitts mit dem Zielsymbol und das Führen des Zielsymbols entlang des Abschnitts mittels Ausrichten der Kamera des Schritts c). Vorteilhafterweise können die Schritte a) und b) zeitgleich mit dem Schritt c) ausgeführt werden, insbesondere mehrfach während des Schritts c) wiederholt werden. Die Schritte a), b) und das Anvisieren des Schritts c) können als Suchen bezeichnet werden.

Mindestens manche Bilder der im Schritt d) aufgenommenen Abfolge von Bildern können selbst als Live-Bilder des Schritts a) dienen. Alternativ können die im Schritt d) aufgenommen Bilder von den Live-Bildern verschieden sein.

Das Kennzeichnen des Schritts e) kann in dem jeweiligen Bild selbst erfolgen und/oder als Metainformation, die dem Bild angehängt werden kann. Insbesondere kann ein zentraler Bildpunkt oder ein zentrales Pixel in den Live-Bildern mit dem Zielsymbol überlagert werden und/oder entsprechend in der aufgenommenen Abfolge von Bildern gekennzeichnet werden. Der Schritt e) kann zeitgleich mit dem Schritt d) und/oder zeitlich nach diesem ausgeführt werden.

Der Schritt e) ermöglicht die Bereitstellung einer Abfolge von Begrenzungsrandbildpunkten und somit Schritt f). Der Schritt f) kann zeitgleich mit dem Schritt e) und/oder zeitlich nach diesem ausgeführt werden. Vorteilhafterweise kann die ermittelte Abfolge von Positionskoordinaten gespeichert werden.

Die Positionskoordinaten können relative Koordinaten in einem lokalen Koordinatensystem sein und/oder absolute Koordinaten in einem globalen Koordinatensystem, wie dem geographischen Koordinatensystem des Planeten Erde. Insbesondere können relative Koordinaten zu globalen Koordinaten transformiert werden. Vorteilhafterweise kann eine Position der Kamera während des Aufnehmens der Abfolge von Bildern mittels mindestens eines Positionsbestimmungsgeräts erfasst werden. Die Position kann als Metainformation mindestens manchen der Bildern, insbesondere allen Bildern, der aufgenommenen Abfolge von Bildern angehängt werden und im Schritt f) miteinfließen. Zusätzlich oder alternativ kann das Ausrichten der Kamera während des Führens des Zielsymbols entlang des Abschnitts erfasst werden, insbesondere mittels mindestens eines Beschleunigungssensors, mindestens eines Drehratensensors und/oder mindestens eines Positionsbestimmungsgeräts. Die Ausrichtung kann als Metainformation mindestens manchen der Bildern, insbesondere allen Bildern, der aufgenommenen Abfolge von Bildern angehängt werden und im Schritt f) miteinfließen.

In einer Weiterbildung der Erfindung umfasst der Schritt d) Aufnehmen der Abfolge von Bildern des Abschnitts aus verschiedenen Positionen und/oder aus verschiedenen Perspektiven und/oder von verschiedenen Standpunkten aus. Zusätzlich oder alternativ umfasst der Schritt d) Aufnehmen der Abfolge von Bildern des Abschnitts mit Tiefeninformation. Verschiedene Positionen können durch translatorisches Bewegen der Kamera erreicht werden. Das translatorische Bewegen der Kamera kann erfasst werden, insbesondere mittels mindestens eines Beschleunigungssensors, mindestens eines Drehratensensors und/oder mindestens eines Positionsbestimmungsgeräts. Das translatorische Bewegen kann als Metainformation mindestens manchen der Bildern, insbesondere allen Bildern, der aufgenommenen Abfolge von Bildern angehängt werden und im Schritt f) miteinfließen. Zusätzlich oder alternativ können verschiedene Positionen durch eine weitere Kamera erreicht werden, insbesondere kann eine Stereokamera die Kamera und die weitere Kamera umfassen. Von welcher Kamera welches Bild aufgenommen worden ist, kann als Metainformation mindestens manchen der Bildern, insbesondere allen Bildern, der aufgenommenen Abfolge von Bildern angehängt werden und im Schritt f) miteinfließen. Die Kamera kann eine TOF-Kamera sein um Tiefeninformation zu erreichen. TOF-Kameras sind 3D-Kamerasysteme, die mit dem Laufzeitverfahren (Englisch: time of flight) Distanzen messen können. Die Tiefeninformation kann im Schritt f) miteinfließen.

In einer Weiterbildung der Erfindung wird im Schritt f) die Abfolge von Positionskoordinaten des Abschnitts des Begrenzungsrands basierend auf den Begrenzungsrandbildpunkten mittels Photogrammetrie ermittelt. Unter Photogrammetrie kann eine Gruppe von Messmethoden und Auswerteverfahren der Fernerkundung verstanden werden, um aus Bildern eines Objektes seine räumliche Lage oder dreidimensionale Form zu bestimmen und/oder zu rekonstruieren. Vorteilhafterweise mittels Bündelblockausgleichung (Englisch: bundle adjustment), Struktur aus Bewegung (Englisch: structure from motion) und/oder visueller simultaner Lokalisierung und Kartenerstellung (Englisch: visual simultaneous localization and mapping). Anders formuliert: aus der aufgenommenen Abfolge von Bildern kann eine Karte des Abschnitts des Begrenzungsrands der Fläche erstellt werden, insbesondere eine dreidimensionale Karte. Basierend auf den Begrenzungsrandbildpunkten kann die Abfolge von Positionskoordinaten des Abschnitts des Begrenzungsrands in der Karte ermittelt werden. Falls eine Karte bereits vorhanden ist, kann in dieser basierend auf den Begrenzungsrandbildpunkten die Abfolge von Positionskoordinaten des Abschnitts des Begrenzungsrands ermittelt werden.

In einer Weiterbildung der Erfindung weist das Verfahren die Schritte auf: g) Aufnehmen von Live-Bildern des Abschnitts. h) Überlagern der aufgenommenen Live-Bilder mit einer Begrenzungsrandlinie basierend auf der ermittelten Abfolge von Positionskoordinaten des Abschnitts des Begrenzungsrands und Anzeigen der mit der Begrenzungsrandlinie überlagerten Live-Bilder. Die Schritte g) und h) ermöglichen eine erweiterte Realität (Englisch: augmented reality) für den Benutzer. Unter erweiterter Realität kann die visuelle Darstellung von Informationen verstanden werden, insbesondere die Ergänzung von Bildern mit Zusatzinformationen und/oder virtuellen Objekten mittels Überlagerung und/oder Einblendung. Dies ermöglicht dem Benutzer eine optische Kontrolle und/oder Überprüfung der ermittelten Abfolge von Positionskoordinaten des Abschnitts des Begrenzungsrands auf einfache Art und Weise. Die Schritte g) und h) können wie die Schritte a) und b) als Live-View-Modus bezeichnet werden, insbesondere können die Schritte g) und h) zeitglich ausgeführt werden. Die Schritte g) und h) können zeitlich nach den Schritten a), b), c), d), e) und f) ausgeführt werden. Zusätzlich oder alternativ kann der Schritt g) zeitgleich mit dem Schritt a) ausgeführt werden, insbesondere dem Schritt a) entsprechen. Entsprechend kann der Schritt h) zeitgleich mit dem Schritt b) ausgeführt werden. Die Begrenzungsrandlinie kann auch als virtueller Spray bezeichnet werden.

In einer Weiterbildung der Erfindung weist das Verfahren die Schritte auf: i) Ausgeben der ermittelten Abfolge von Positionskoordinaten des Abschnitts des Begrenzungsrands. j) Freigeben der ermittelten Abfolge von Positionskoordinaten zum Bearbeiten. Vorteilhafterweise kann der Schritt i) auf den Schritten g) und h) basieren, insbesondere kann die ermittelte Abfolge von Positionskoordinaten des Abschnitts des Begrenzungsrands im erweiterten Realitäts-Modus angezeigt werden. Bearbeiten kann ein Editieren, Ändern, Verschieben und/oder Glätten umfassen. Vorteilhafterweise kann die bearbeitete Abfolge von Positionskoordinaten gespeichert werden.

Des Weiteren bezieht sich die Erfindung auf ein Verfahren zum Betreiben eines autonomen mobilen Grünflächenbearbeitungsroboters auf der zu bearbeitenden Fläche mit dem Begrenzungsrand. Das erfindungsgemäße Verfahren umfasst das zuvor beschriebene Verfahren zum Erfassen mindestens des Abschnitts des Begrenzungsrands. Des Weiteren weist das Verfahren den Schritt auf: Steuern, insbesondere automatisches Steuern, einer Bewegung des autonomen mobilen Grünflächenbearbeitungsroboters auf der zu bearbeitenden Fläche in Abhängigkeit von der ermittelten Abfolge von Positionskoordinaten mindestens des Abschnitts des Begrenzungsrands derart, dass der Grünflächenbearbeitungsroboter auf der zu bearbeitenden Fläche bleibt, insbesondere innerhalb des Begrenzungsrands.

Dies ermöglicht ein autonomes Bearbeiten der zu bearbeitenden Fläche mittels des autonomen mobilen Grünflächenbearbeitungsroboters. Autonom Bearbeiten kann bedeuten, dass sich der Grünflächenbearbeitungsroboter auf der zur bearbeitenden Fläche selbstständig, selbsttätig, selbstbestimmt, selbstgesteuert und/oder unabhängig von dem Benutzer bewegen und/oder agieren und/oder zumindest einen Parameter, wie insbesondere einen Streckenparameter, und/oder einen Umkehrpunkt auswählen kann. Autonom Bearbeiten kann zusätzlich oder alternativ bedeuten, dass der Grünflächenbearbeitungsroboter selbstständig mit einem Arbeiten beginnen und/oder das Arbeiten beenden kann. Beim autonomen Bearbeiten braucht der Grünflächenbearbeitungsroboter nicht durch den Benutzer gesteuert zu sein, insbesondere nicht ferngesteuert. In anderen Worten: bei dem autonomen Bearbeiten kann der Grünflächenbearbeitungsroboter insbesondere ohne menschliche Steuerung und/oder Führung arbeiten. Der autonome mobile Grünflächenbearbeitungsroboter kann als Serviceroboter und/oder Dienstleistungsroboter bezeichnet werden. Vorteilhafterweise kann der Grünflächenbearbeitungsroboter ein Bearbeitungswerkzeug zum Bearbeiten der zu bearbeitenden Fläche aufweisen.

In einer Weiterbildung der Erfindung weist der autonome mobile Grünflächenbearbeitungsroboter eine, insbesondere ausrichtbare, Roboterkamera auf. Das Verfahren weist den Schritt auf: Aufnehmen, insbesondere automatisches Aufnehmen, von Roboterbildern mindestens eines Ausschnitts der zu bearbeitenden Fläche, insbesondere mindestens des Abschnitts des Begrenzungsrands, mittels der Roboterkamera. Das Verfahren umfasst: Steuern, insbesondere automatisches Steuern, der Bewegung des autonomen mobilen Grünflächenbearbeitungsroboters auf der zu bearbeitenden Fläche in Abhängigkeit von den aufgenommenen Roboterbildern.

Außerdem bezieht sich die Erfindung auf ein Erfassungssystem, insbesondere zum Ausführen des zuvor beschriebenen Verfahrens. Das erfindungsgemäße Erfassungssystem weist eine ausrichtbare Kamera, eine Recheneinheit und einen Bildschirm auf. Die ausrichtbare Kamera ist zum Aufnehmen von Live-Bildern und der Abfolge von Bildern mindestens des Abschnitts des Begrenzungsrands der zu bearbeitenden Fläche während eines Ausrichtens der Kamera ausgebildet. Die Recheneinheit ist zum Überlagern der aufgenommenen Live-Bilder mit dem Zielsymbol, zum Kennzeichnen in einem jeweiligen Bild der aufgenommenen Abfolge von Bildern des mit dem Zielsymbol referenzierten Bildpunkts als Begrenzungsrandbildpunkt und zum Ermitteln und/oder Bestimmen der Abfolge von Positionskoordinaten des Abschnitts des Begrenzungsrands basierend auf den Begrenzungsrandbildpunkten ausgebildet. Der Bildschirm ist zum Anzeigen der mit dem Zielsymbol überlagerten Live-Bilder ausgebildet.

Das Erfassungssystem ermöglicht die Abfolge von Positionskoordinaten des Abschnitts des Begrenzungsrands der Fläche auf benutzerfreundliche Weise zu erfassen.

Vorteilhafterweise kann die Kamera eine Digitalkamera sein. Der Bildschirm kann als elektronischer Sucher bezeichnet werden. Insbesondere kann der Bildschirm als ein Touchscreen zum Ausgeben der ermittelten Abfolge von Positionskoordinaten des Abschnitts des Begrenzungsrands und zum Bearbeiten ausgebildet sein. Vorteilhafterweise kann die Recheneinheit zusätzlich als Speichereinheit zum Speichern mindestens der Abfolge von Positionskoordinaten des Abschnitts des Begrenzungsrands ausgebildet sein. Insbesondere kann das Erfassungssystem mindestens einen Beschleunigungssensor, mindestens einen Drehratensensor und/oder mindestens ein Positionsbestimmungsgerät zum Erfassen einer Position, einer Ausrichtung und/oder einer translatorischen Bewegung der Kamera aufweisen. Die Recheneinheit kann zum Zusammenwirken mit dem Beschleunigungssensor, dem Drehratensensor und/oder dem Positionsbestimmungsgerät, soweit vorhanden, ausgebildet sein.

In einer Weiterbildung der Erfindung weist das Erfassungssystem ein mobiles und/oder portables Erfassungsgerät auf. Das mobile Erfassungsgerät umfasst die ausrichtbare Kamera und den Bildschirm. Vorteilhafterweise kann das mobile Erfassungsgerät die Recheneinheit umfassen. Insbesondere kann das mobile Erfassungsgerät ein Smartphone und/oder ein Tablet sein.

In einer Weiterbildung weist das Erfassungssystem eine weitere ausrichtbare Kamera auf. Zusätzlich oder alternativ umfasst die ausrichtbare Kamera eine TOF-Kamera. Insbesondere kann das Erfassungssystem eine Stereokamera aufweisen, welche die Kamera und die weitere Kamera umfassen kann.

Weiter bezieht sich die Erfindung auf ein Grünflächenbearbeitungssystem, insbesondere zum Ausführen des zuvor beschriebenen Verfahrens. Das erfindungsgemäße Grünflächenbearbeitungssystem weist das zuvor beschriebene Erfassungssystem, einen autonomen mobilen Grünflächenbearbeitungsroboter und eine Steuereinheit auf. Die Steuereinheit ist zum Steuern der Bewegung des autonomen mobilen Grünflächenbearbeitungsroboters auf der zu bearbeitenden Fläche in Abhängigkeit von der ermittelten Abfolge von Positionskoordinaten mindestens des Abschnitts des Begrenzungsrands derart ausgebildet, dass der Grünflächenbearbeitungsroboter auf der zu bearbeitenden Fläche bleibt, insbesondere innerhalb des Begrenzungsrands.

Dies ermöglicht ein autonomes Bearbeiten der zu bearbeitenden Fläche mittels des autonomen mobilen Grünflächenbearbeitungsroboters.

Die Steuereinheit kann zum Zusammenwirken mit dem Erfassungssystem ausgebildet sein. Insbesondere kann der Grünflächenbearbeitungsroboter die Steuereinheit umfassen. Vorteilhafterweise kann der Grünflächenbearbeitungsroboter ein Bearbeitungswerkzeug zum Bearbeiten der zu bearbeitenden Fläche aufweisen.

In einer Weiterbildung der Erfindung weist der autonome mobile Grünflächenbearbeitungsroboter eine, insbesondere ausrichtbare, Roboterkamera auf. Die Roboterkamera ist zum Aufnehmen von Roboterbildern mindestens eines Ausschnitts der zu bearbeitenden Fläche ausgebildet. Die Steuereinheit ist zum Steuern der Bewegung des autonomen mobilen Grünflächenbearbeitungsroboters auf der zu bearbeitenden Fläche in Abhängigkeit von den aufgenommenen Roboterbildern ausgebildet.

In einer Weiterbildung der Erfindung weist das Erfassungssystem eine Erfassungsübertragungseinheit auf. Die Steuereinheit weist eine Steuerübertragungseinheit auf. Die Erfassungsübertragungseinheit und die Steuerübertragungseinheit sind zum Zusammenwirken miteinander und zum drahtlosen und/oder kabellosen Übertragen der ermittelten Abfolge von Positionskoordinaten mindestens des Abschnitts des Begrenzungsrands ausgebildet. Dies ermöglicht ein benutzerfreundliches Übertragen.

In einer Weiterbildung der Erfindung ist der autonome mobile Grünflächenbearbeitungsroboter als ein Rasenmähroboter mit einem Rasenmähwerkzeug ausgebildet. Insbesondere kann der Grünflächenbearbeitungsroboter als ein Mulchmähroboter ausgebildet sein. Vorteilhafterweise kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen. Dies kann ein Mähen von Gras, krautigen Pflanzen, holzigem Gestrüpp oder kleineren Gehölzen mittels des Rasenmähwerkzeugs ermöglichen. Vorteilhafterweise kann das Rasenmähwerkzeug als ein rotierendes Rasenmähwerkzeug und dazu ausgebildet sein, das zu mähende Gut im sogenannten Freischnittverfahren ohne Gegenschneide zu mähen, insbesondere durch Zentrifugalkraft des Rasenmähwerkzeugs einen Schneidvorgang zu erzeugen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: eine Rückansicht eines erfindungsgemäßen Erfassungssystems,
- Fig. 3: eine Vorderansicht des Erfassungssystems der Fig. 2,
- Fig. 4: eine schematische Ansicht eines autonomen mobilen Grünflächenbearbeitungsroboters eines erfindungsgemäßen Grünflächenbearbeitungssystems,
- Fig. 5: eine Draufsicht auf eine mittels des Verfahrens der Fig. 1 und des Erfassungssystems der Fig. 2 und 3 zu erfassende und mittels des Grünflächenbearbeitungsroboters der Fig. 4 zu bearbeitende Fläche,
- Fig. 6: ein mit einem Zielsymbol überlagertes Live-Bild eines Abschnitts eines Begrenzungsrands der Fläche der Fig. 5 und
- Fig. 7: ein mit einer Begrenzungsrandlinie überlagertes Live-Bild des Abschnitts entsprechend Fig. 6.

### DETAILLIERTE BESCHREIBUNG DER AUSFÜHRUNGSBEISPIELE

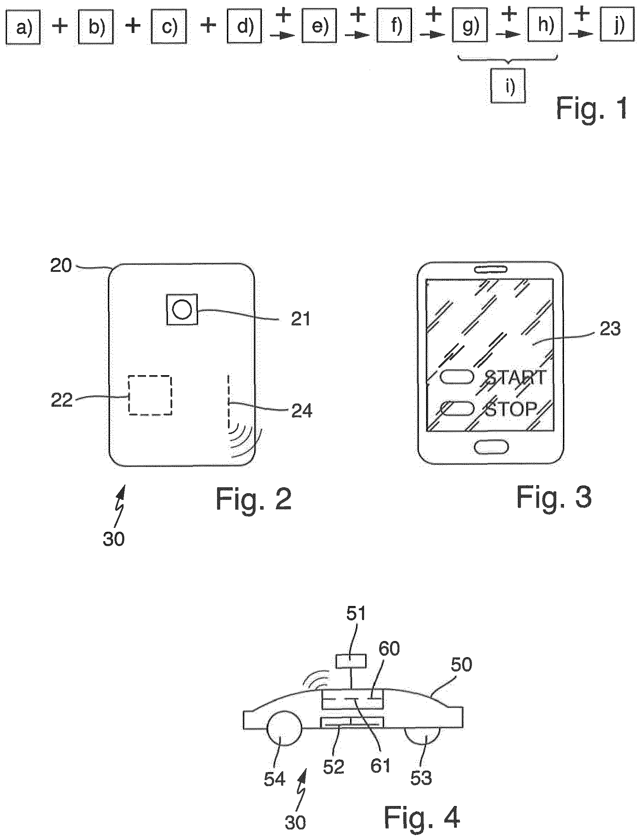

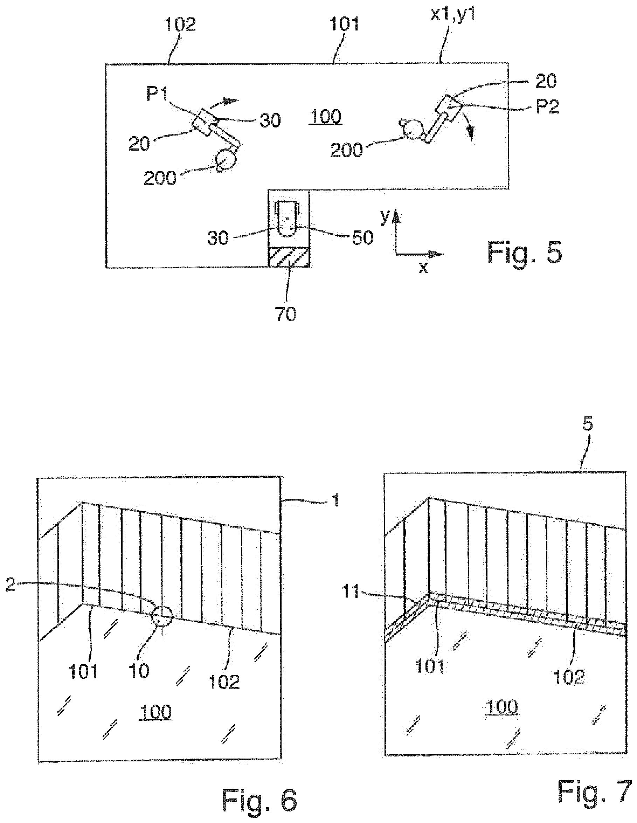

Fig. 2 und 3 zeigen ein erfindungsgemäßes Erfassungssystem 20. Das Erfassungssystem 20 weist eine ausrichtbare Kamera 21, eine Recheneinheit 22 und einen Bildschirm 23 auf. Die ausrichtbare Kamera 21 ist zum Aufnehmen von Live-Bildern 1, 5, wie in Fig. 6 und 7 zu erkennen, und einer Abfolge von Bildern 1 mindestens eines Abschnitts 102 eines Begrenzungsrands 101 einer zu bearbeitenden Fläche 100, wie in Fig. 5 zu erkennen, während eines Ausrichtens der Kamera 21 ausgebildet. Die Recheneinheit 22 ist zum Überlagern der aufgenommenen Live-Bilder 1 mit einem Zielsymbol 10, zum Kennzeichnen in einem jeweiligen Bild 1 der aufgenommen Abfolge von Bildern eines mit dem Zielsymbol 10 referenzierten Bildpunkts 2 als Begrenzungsrandbildpunkt und zum Ermitteln einer Abfolge von Positionskoordinaten x1, y1 mindestens des Abschnitts 102 des Begrenzungsrands 101 basierend auf den Begrenzungsrandbildpunkten ausgebildet. Der Bildschirm 23 ist zum Anzeigen der mit dem Zielsymbol 10 überlagerten Live-Bilder 1 ausgebildet, wie in Fig. 6 zu erkennen. Im gezeigten Ausführungsbeispiel begrenzt oder definiert der Begrenzungsrand 101 in Form eines Zauns die zu bearbeitende Fläche 100 in Form einer Wiese mit Rasen.

Somit ermöglicht das Erfassungssystem 20 die Abfolge von Positionskoordinaten x1, y1 mindestens des Abschnitts 102 des Begrenzungsrands 101 der zu bearbeitenden Fläche 100 auf benutzerfreundliche Weise zu erfassen.

Im Detail ist die Kamera 21 eine Digitalkamera, insbesondere eine TOF-Kamera. Die Recheneinheit 22 ist zusätzlich als Speichereinheit zum Speichern mindestens der Abfolge von Positionskoordinaten x1, y1 des Begrenzungsrands 101 ausgebildet. Der Bildschirm 23 ist als ein Touchscreen ausgebildet, insbesondere zum Ausgeben der ermittelten Abfolge von Positionskoordinaten x1, y1 und zum Bearbeiten dieser.

Das Erfassungssystem 20 ein mobiles Erfassungsgerät in Form eines Smartphones auf. Das mobile Erfassungsgerät umfasst die ausrichtbare Kamera 21 und den Bildschirm 23 sowie zusätzlich die Recheneinheit 22.

Des Weiteren weist das Erfassungssystem 20 eine Erfassungsübertragungseinheit 24. Im gezeigten Ausführungsbeispiel umfasst das mobile Erfassungsgerät die Erfassungsübertragungseinheit 24.

Fig. 1 zeigt ein erfindungsgemäßes Verfahren zum Erfassen mindestens des Abschnitts 102 des Begrenzungsrands 101 der zu bearbeitenden Fläche 100, insbesondere mittels des zuvor beschriebenen Erfassungssystems 20. In einem Schritt a) werden Live-Bilder 1 mittels der Kamera 21 aufgenommen. In einem Schritt b) werden die aufgenommenen Live-Bilder 1 mit einem Zielsymbol 10 in Form eines Fadenkreuz in Echtzeit überlagert und die mit dem Zielsymbol 10 überlagerten Live-Bilder 1 werden in Echtzeit angezeigt, wie in Fig. 6 zu erkennen. Die Schritte a) und b) können als Live- View-Modus bezeichnet werden. In einem Schritt c) wird der Abschnitt 102 mit dem Zielsymbol 10 anvisiert und das Zielsymbol 10 entlang des Abschnitts 102 mittels Ausrichten der Kamera 21 geführt, insbesondere durch den Benutzer 200, wie in Fig. 5 durch Pfeile angedeutet. In einem Schritt d) wird die Abfolge von Bildern 1 des Abschnitts 102 mittels der Kamera 21 während des Führens aufgenommen. Im gezeigten Ausführungsbeispiel dient ein im Schritt d) aufgenommenes Bild 1 als Live-Bild des Schritts a). In einem Schritt e) werden in einem jeweiligen Bild der aufgenommenen Abfolge von Bildern 1 eines mit dem Zielsymbol 10 referenzierten Bildpunkts 2 als Begrenzungsrandbildpunkt gekennzeichnet, wie in Fig. 6 zu erkennen. Im gezeigten Ausführungsbeispiel wird ein zentraler Bildpunkt 2 in dem Live-Bild 1 mit dem Zielsymbol 10 überlagert und entsprechend wird in der aufgenommenen Abfolge von Bildern 1 der zentrale Bildpunkt als Begrenzungsrandbildpunkt gekennzeichnet. In einem Schritt f) wird die Abfolge von Positionskoordinaten x1, y1 mindestens des Abschnitts 102 des Begrenzungsrands 101 basierend auf den Begrenzungsrandbildpunkten ermittelt. Im gezeigten Ausführungsbeispiel wird die ermittelte Abfolge von Positionskoordinaten x1, y1 anschließend gespeichert. Die Positionskoordinaten x1, y1 sind relative Koordinaten in einem lokalen Koordinatensystem der Fläche 100, wie in Fig. 5 durch das Achsenkreuz angedeutet.

Somit ermöglicht das Verfahren entsprechend die Abfolge von Positionskoordinaten x1, y1 mindestens des Abschnitts 102 des Begrenzungsrands 101 der zu bearbeitenden Fläche 100 auf benutzerfreundliche Weise zu erfassen.

Im Detail umfasst der Schritt d) Aufnehmen der Abfolge von Bildern 1 des Begrenzungsrands 101 aus verschiedenen Positionen P1, P2, wie in Fig. 5 zu erkennen. Im gezeigten Ausführungsbeispiel werden die verschiedenen Positionen P1, P2 durch translatorisches Bewegen der Kamera 21 erreicht, insbesondere läuft der Benutzer 200 auf der Wiese 100 herum. Zusätzlich umfasst der Schritt d) Aufnehmen der Abfolge von Bildern 1 des Begrenzungsrands 101 mit Tiefeninformation, insbesondere mittels der TOF-Kamera 21. In alternativen Ausführungsbeispielen kann es ausreichen, dass der Schritt d) nur ein Aufnehmen der Abfolge von Bildern des Begrenzungsrands aus verschiedenen Positionen oder nur ein Aufnehmen der Abfolge von Bildern des Begrenzungsrands mit Tiefeninformation umfassen kann. In weiteren alternativen Ausführungsbeispielen können verschiedene Positionen durch eine weitere Kamera erreicht werden, insbesondere kann das Erfassungssystem eine Stereokamera aufweisen, welche die Kamera und die weitere Kamera umfassen kann.

Im Schritt f) wird die Abfolge von Positionskoordinaten x1, y1 des Begrenzungsrands 101 basierend auf den Begrenzungsrandbildpunkten mittels Photogrammetrie ermittelt. Anders formuliert: aus der aufgenommen Abfolge von Bildern 1 wird eine dreidimensionale Karte des Begrenzungsrands 101 der Fläche 100 erstellt. Basierend auf den Begrenzungsrandbildpunkten wird die Abfolge von Positionskoordinaten x1, y1 des Begrenzungsrands 101 in der Karte ermittelt. Damit die Karte nicht nur den Begrenzungsrand 101, sondern auch ein Inneres der Fläche 100 umfassen kann, sind zusätzliche Aufnahmen des Inneren der Fläche 100 möglich. Um die Aufnahmen des Begrenzungsrands 101 von Aufnahmen des Inneren der Fläche 100 unterscheiden zu können, können die Aufnahmen des Begrenzungsrands 101 mittels eines Start-Buttons auf dem Touchscreen 23 zu Beginn des Führens des Schritts c) gestartet werden und mittels eines Stop-Buttons auf dem Touchscreen 23 nach dem Abschluss des Führens beendet werden, wie in Fig. 3 zu erkennen.

Außerdem weist das Verfahren die Schritte g) und h) auf. Im Schritt g) werden weitere Live-Bilder 5 des Begrenzungsrands 101 mittels der Kamera 21 aufgenommen. Im Schritt h) werden die aufgenommenen Live-Bilder 5 mit einer Begrenzungsrandlinie 11 basierend auf der ermittelten Abfolge von Positionskoordinaten x1, y1 des Begrenzungsrands 101 mittels der Recheneinheit 22 in Echtzeit überlagert und die mit der Begrenzungsrandlinie 10 überlagerten Live-Bilder 5 werden mittels des Bildschirms 23 in Echtzeit angezeigt, wie in Fig. 7 durch die Schraffur angedeutet. Die Schritte g) und h) ermöglichen eine erweiterte Realität für den Benutzer 200. Dies ermöglicht dem Benutzer 200 eine optische Kontrolle der ermittelten Abfolge von Positionskoordinaten x1, y1 des Begrenzungsrands 101 auf einfache Art und Weise. Im gezeigten Ausführungsbeispiel werden die Schritte g) und h) zeitlich nach den Schritten a), b), c), d), e) und f) ausgeführt. In anderen Worten: die optische Kontrolle findet zeitlich nach dem vollständigen Abschluss der Ermittlung der Abfolge von Positionskoordinaten x1, y1 des Begrenzungsrands 101 statt. In alternativen Ausführungsbeispielen kann der Schritt g) zeitlich mit dem Schritt a) ausgeführt werden. Entsprechend kann der Schritt h) zeitlich mit dem Schritt b) ausgeführt werden. Anders formuliert: während das Erfassen des Begrenzungsrands 101 noch nicht vollständig abgeschlossen ist, können bereits erfasste Positionskoordinaten x1, y1 mittels der Begrenzungsrandlinie 11 angezeigt werden. In diesem Falle würde, bei dem in Fig. 5 angedeuteten Führen des Zielsymbols 10 von links nach rechts, in dem Bild der Fig. 6 vom linken Bildrand entlang des Begrenzungsrands 101 bis zum Zielsymbol 10 die Begrenzungsrandlinie 11 angezeigt werden.

Zudem weist das Verfahren die Schritte i) und j) auf. Im Schritt i) wird die ermittelte Abfolge von Positionskoordinaten x1, y1 des Begrenzungsrands 101 ausgegeben, insbesondere im erweiterten Realitäts-Modus der Schritte g) und h). Im Schritt j) wird die ermittelte Abfolge von Positionskoordinaten x1, y1 zum Bearbeiten freigegeben, insbesondere mittels des Touchscreens 23. Vorteilhafterweise kann die bearbeitete Abfolge von Positionskoordinaten x1, y1 anschließend gespeichert werden.

Das Erfassungssystem 20 ist Teil eines erfindungsgemäßen Grünflächenbearbeitungssystems 30. Neben dem Erfassungssystem 20 weist das Grünflächenbearbeitungssystem 30 einen autonomen mobilen Grünflächenbearbeitungsroboter 50 und eine Steuereinheit 60 auf, wie in Fig. 4 gezeigt. Die Steuereinheit 60 ist zum Steuern einer Bewegung des Grünflächenbearbeitungsroboters 50 auf der zu bearbeitenden Fläche 100 in Abhängigkeit von der ermittelten Abfolge von Positionskoordinaten x1, y1 des Begrenzungsrands 101 derart ausgebildet, dass der Grünflächenbearbeitungsroboter 50 auf der Fläche 100 bleibt, insbesondere innerhalb des Begrenzungsrands 101. Im gezeigten Ausführungsbeispiel umfasst der Grünflächenbearbeitungsroboter 50 die Steuereinheit 60. Die Steuereinheit 60 ist zum Zusammenwirken mit dem Erfassungssystem 20 ausgebildet.

Somit ermöglicht das Grünflächenbearbeitungssystem 30 ein autonomes Bearbeiten der Fläche 100 mittels des autonomen mobilen Grünflächenbearbeitungsroboters 50.

Entsprechend umfasst ein erfindungsgemäßes Verfahren zum Betreiben des autonomen mobilen Grünflächenbearbeitungsroboters 50 auf der zu bearbeitenden Fläche 100 mit dem Begrenzungsrand 101 das zuvor beschriebene Verfahren zum Erfassen des Begrenzungsrands 101. Des Weiteren weist das Verfahren den Schritt auf: Steuern der Bewegung des Grünflächenbearbeitungsroboters 50 auf der Fläche 100 in Abhängigkeit von der ermittelten Abfolge von Positionskoordinaten x1, y1 des Begrenzungsrands 101 derart, dass der Grünflächenbearbeitungsroboter 50 auf der Fläche 100 bleibt, insbesondere innerhalb des Begrenzungsrands 101.

Somit ermöglicht das Verfahren ein autonomes Bearbeiten der zu bearbeitenden Fläche 100 mittels des autonomen mobilen Grünflächenbearbeitungsroboters 50.

Im Detail weist der autonome mobile Grünflächenbearbeitungsroboter 50 eine ausrichtbare Roboterkamera 51 auf. Die Roboterkamera 51 ist zum Aufnehmen von Roboterbildern mindestens eines Ausschnitts der zu bearbeitenden Fläche 100 ausgebildet, insbesondere mindestens des Abschnitts 102 des Begrenzungsrands 101. Die Steuereinheit 60 ist zum Steuern der Bewegung des Grünflächenbearbeitungsroboters 50 auf der Fläche 100 in Abhängigkeit von den aufgenommenen Roboterbildern ausgebildet.

Entsprechend weist das Verfahren den Schritt auf: Aufnehmen von Roboterbildern mindestens des Ausschnitts der zu bearbeitenden Fläche 100 mittels der Roboterkamera 51. Das Verfahren umfasst: Steuern der Bewegung des autonomen mobilen Grünflächenbearbeitungsroboters 50 auf der Fläche 100 in Abhängigkeit von den aufgenommenen Roboterbildern.

Im Detail weist die Steuereinheit 60 eine Steuerübertragungseinheit 61 auf. Die Erfassungsübertragungseinheit 24 des Erfassungssystems 20 und die Steuerübertragungseinheit 61 sind zum Zusammenwirken miteinander und zum drahtlosen Übertragen der ermittelten Abfolge von Positionskoordinaten x1, y1, des Begrenzungsrands 101 ausgebildet, insbesondere von dem mobilen Erfassungsgerät zu dem autonomen mobilen Grünflächenbearbeitungsroboter.

Der autonome mobile Grünflächenbearbeitungsroboter 50 ist als ein Rasenmähroboter mit einem Rasenmähwerkzeug 52 ausgebildet, insbesondere als ein Mulchmähroboter. Im gezeigten Ausführungsbeispiel umfasst das Rasenmähwerkzeug 52 ein Metallschneideblatt mit Schneidezähnen. Das Rasenmähwerkzeug 52 ist als ein rotierendes Rasenmähwerkzeug und dazu ausgebildet, die zu bearbeitende Fläche 100 im Freischnittverfahren zu Mähen, insbesondere durch Zentrifugalkraft des Rasenmähwerkzeugs 52 einen Schneidvorgang zu erzeugen.

Außerdem weist der autonome mobile Grünflächenbearbeitungsroboter 50 vordere Laufräder 53, die schwenkbar sind, und hintere Laufräder 54 auf, die getrennt voneinander angetrieben sind. Somit kann sich der Grünflächenbearbeitungsroboter 50 auf der zu bearbeitenden Fläche 100 selbständig bewegen und lenken. Weiterhin weist der Grünflächenbearbeitungsroboter 50 einen nicht dargestellten Elektromotor zum Antrieb des Rasenmähwerkzeugs 52 auf. In alternativen Ausführungsbeispielen kann der Grünflächenbearbeitungsroboter 50 einen Verbrennungsmotor, insbesondere einen Benzinmotor, zum Antrieb des Rasenmähwerkzeugs 52 aufweisen. Zudem weist der Grünflächenbearbeitungsroboter 50 einen nicht dargestellten Akkumulator zur Antriebsenergieversorgung der hinteren Laufräder 54 und des Elektromotors zum Antrieb des Rasenmähwerkzeugs 52 auf. In alternativen Ausführungsbeispielen kann der Grünflächenbearbeitungsroboter eine Brennstoffzelle oder eine andere Art einer Antriebsenergiequelle zur Antriebsenergieversorgung aufweisen.

Weiter weist das Grünflächenbearbeitungssystem 30 eine Basisstation 70 für den autonomen mobilen Grünflächenbearbeitungsroboter 50 auf, die hier an dem Begrenzungsrand 101 der Fläche 100 angeordnet ist, wie in Fig. 5 unten zu erkennen. Im gezeigten Ausführungsbeispiel ist die Basisstation 70 als eine Ladestation zum Wiederaufladen, insbesondere zum automatischen, des Akkumulators des Grünflächenbearbeitungsroboters 50 ausgebildet.

Wie die gezeigten und oben erläuterten Ausführungsbeispiele deutlich machen, stellt die Erfindung ein vorteilhaftes Verfahren zum Erfassen mindestens eines Abschnitts eines Begrenzungsrands einer zu bearbeitenden Fläche bereit, das benutzerfreundlich ist, sowie ein Verfahren zum Betreiben eines autonomen mobilen Grünflächenbearbeitungsroboters auf der zu bearbeitenden Fläche, ein Erfassungssystem und ein Grünflächenbearbeitungssystem mit dem Erfassungssystem und dem autonomen mobilen Grünflächenbearbeitungsroboter.

## Patentansprüche

1. Verfahren zum Erfassen mindestens eines Abschnitts (102) eines Begrenzungsrands (101) einer zu bearbeitenden Fläche (100), wobei das Verfahren die Schritte aufweist:
a) Aufnehmen von Live-Bildern (1) mittels einer Kamera (21),
b) Überlagern der aufgenommenen Live-Bilder mit einem Zielsymbol (10) und Anzeigen der mit dem Zielsymbol überlagerten Live-Bilder (1),
c) Anvisieren des Abschnitts mit dem Zielsymbol und Führen des Zielsymbols entlang des Abschnitts mittels Ausrichten der Kamera,
d) Aufnehmen einer Abfolge von Bildern (1) des Abschnitts mittels der Kamera während des Führens,
e) Kennzeichnen in einem jeweiligen Bild der aufgenommenen Abfolge von Bildern eines mit dem Zielsymbol referenzierten Bildpunkts (2) als Begrenzungsrandbildpunkt, und
f) Ermitteln einer Abfolge von Positionskoordinaten (x1, y1) des Abschnitts des Begrenzungsrands basierend auf den Begrenzungsrandbildpunkten.

2. Verfahren nach Anspruch 1, wobei der Schritt d) umfasst:
- Aufnehmen der Abfolge von Bildern (1) des Abschnitts (102) aus verschiedenen Positionen (P1, P2) und/oder
- Aufnehmen der Abfolge von Bildern (1) des Abschnitts mit Tiefeninformation.

3. Verfahren nach Anspruch 1 oder 2,
- wobei im Schritt f) die Abfolge von Positionskoordinaten (x1, y1) des Abschnitts (102) des Begrenzungsrands (101) basierend auf den Begrenzungsrandbildpunkten (2) mittels Photogrammetrie ermittelt wird.

4. Verfahren nach einem der vorhergehenden Ansprüche, wobei das Verfahren die Schritte aufweist:
g) Aufnehmen von Live-Bildern (5) des Abschnitts (102) und
h) Überlagern der aufgenommenen Live-Bilder mit einer Begrenzungsrandlinie (11) basierend auf der ermittelten Abfolge von Positionskoordinaten (x1, y1) des Abschnitts des Begrenzungsrands (101) und Anzeigen der mit der Begrenzungsrandlinie überlagerten Live-Bilder (5).

5. Verfahren nach einem der vorhergehenden Ansprüche, wobei das Verfahren die Schritte aufweist:
i) Ausgeben der ermittelten Abfolge von Positionskoordinaten (x1, y1) des Abschnitts (102) des Begrenzungsrands (101) und
j) Freigeben der ermittelten Abfolge von Positionskoordinaten zum Bearbeiten.

6. Verfahren zum Betreiben eines autonomen mobilen Grünflächenbearbeitungsroboters (50) auf einer zu bearbeitenden Fläche (100) mit einem Begrenzungsrand (101),
- wobei das Verfahren ein Verfahren nach einem der vorhergehenden Ansprüche zum Erfassen des Begrenzungsrands (101) umfasst und
- wobei das Verfahren den Schritt aufweist:
Steuern einer Bewegung des autonomen mobilen Grünflächenbearbeitungsroboters (50) auf der zu bearbeitenden Fläche (100) in Abhängigkeit von der ermittelten Abfolge von Positionskoordinaten (x1, y1) des Begrenzungsrands derart, dass der Grünflächenbearbeitungsroboter auf der zu bearbeitenden Fläche bleibt.

7. Verfahren nach Anspruch 6,
- wobei der autonome mobile Grünflächenbearbeitungsroboter (50) eine Roboterkamera (51) aufweist,
- wobei das Verfahren den Schritt aufweist:
Aufnehmen von Roboterbildern mindestens eines Ausschnitts der zu bearbeitenden Fläche (100) mittels der Roboterkamera (51) und
- wobei das Verfahren umfasst:
Steuern der Bewegung des autonomen mobilen Grünflächenbearbeitungsroboters (50) auf der zu bearbeitenden Fläche in Abhängigkeit von den aufgenommenen Roboterbildern.

8. Erfassungssystem (20), insbesondere zum Ausführen eines Verfahrens nach einem der Ansprüche 1 bis 5, wobei das Erfassungssystem aufweist:
- eine ausrichtbare Kamera (21), wobei die ausrichtbare Kamera zum Aufnehmen von Live-Bildern (1) und einer Abfolge von Bildern (1) mindestens eines Abschnitts (102) eines Begrenzungsrands (101) einer zu bearbeitenden Fläche (100) während eines Ausrichtens der Kamera ausgebildet ist,
- eine Recheneinheit (22), wobei die Recheneinheit zum Überlagern der aufgenommenen Live-Bilder mit einem Zielsymbol (10), zum Kennzeichnen in einem jeweiligen Bild der aufgenommenen Abfolge von Bildern eines mit dem Zielsymbol referenzierten Bildpunkts (2) als Begrenzungsrandbildpunkt und zum Ermitteln einer Abfolge von Positionskoordinaten (x1, y1) des Abschnitts des Begrenzungsrands basierend auf den Begrenzungsrandbildpunkten ausgebildet ist, und
- einen Bildschirm (23), wobei der Bildschirm zum Anzeigen der mit dem Zielsymbol überlagerten Live-Bilder (1) ausgebildet ist.

9. Erfassungssystem (20) nach Anspruch 8,
- wobei das Erfassungssystem (20) ein mobiles Erfassungsgerät aufweist, wobei das mobile Erfassungsgerät die ausrichtbare Kamera (21) und den Bildschirm (23) umfasst.

10. Erfassungssystem (20) nach Anspruch 8 oder 9,
- wobei das Erfassungssystem (20) eine weitere ausrichtbare Kamera aufweist und/oder
- die ausrichtbare Kamera (21) eine TOF-Kamera umfasst.

11. Grünflächenbearbeitungssystem (30), insbesondere zum Ausführen eines Verfahrens nach Anspruch 6 oder 7, wobei das Grünflächenbearbeitungssystem aufweist:
- ein Erfassungssystem (20) nach einem der Ansprüche 8 bis 10,
- einen autonomen mobilen Grünflächenbearbeitungsroboter (50) und
- eine Steuereinheit (60), wobei die Steuereinheit zum Steuern einer Bewegung des autonomen mobilen Grünflächenbearbeitungsroboters auf der zu bearbeitenden Fläche (100) in Abhängigkeit von der ermittelten Abfolge von Positionskoordinaten (x1, y1) des Begrenzungsrands (101) derart ausgebildet ist, dass der Grünflächenbearbeitungsroboter auf der zu bearbeitenden Fläche bleibt.

12. Grünflächenbearbeitungssystem (30) nach Anspruch 11,
- wobei der autonome mobile Grünflächenbearbeitungsroboter (50) eine Roboterkamera (51) aufweist, wobei die Roboterkamera zum Aufnehmen von Roboterbildern mindestens eines Ausschnitts der zu bearbeitenden Fläche (100) ausgebildet ist, und
- wobei die Steuereinheit (60) zum Steuern der Bewegung des autonomen mobilen Grünflächenbearbeitungsroboters auf der zu bearbeitenden Fläche (100) in Abhängigkeit von den aufgenommenen Roboterbildern ausgebildet ist.

13. Grünflächenbearbeitungssystem (30) nach Anspruch 11 oder 12,
- wobei das Erfassungssystem (20) eine Erfassungsübertragungseinheit (24) aufweist und wobei die Steuereinheit (60) eine Steuerübertragungseinheit (61) aufweist, wobei die Erfassungsübertragungseinheit und die Steuerübertragungseinheit zum Zusammenwirken miteinander und zum drahtlosen Übertragen der ermittelten Abfolge von Positionskoordinaten (x1, y1) des Begrenzungsrands (101) ausgebildet sind.

14. Grünflächenbearbeitungssystem (30) nach einem der Ansprüche 11 bis 13,
- wobei der autonome mobile Grünflächenbearbeitungsroboter (50) als ein Rasenmähroboter mit einem Rasenmähwerkzeug (52) ausgebildet ist.

## Claims

1. Method for identifying at least one section (102) of a boundary edge (101) of an area (100) to be treated, the method comprising the steps:
a) recording live images (1) using a camera (21),
b) superimposing the recorded live images with a target symbol (10) and displaying the live images (1) with the superimposed target symbol,
c) aiming at the section with the target symbol and guiding the target symbol along the section by orienting the camera,
d) recording a sequence of images (1) of the section using the camera during the guiding procedure,
e) marking, in a respective image of the recorded sequence of images, an image point (2) referenced with the target symbol as a boundary edge image point, and
f) obtaining a sequence of position coordinates (x1, y1) of the section of the boundary edge based on the boundary edge image points.

2. Method according to claim 1, wherein step d) comprises:
- recording the sequence of images (1) of the section (102) from different positions (P1, P2) and/or
- recording the sequence of images (1) of the section including depth information.

3. Method according to claim 1 or 2,
- wherein in step f) the sequence of position coordinates (x1, y1) of the section (102) of the boundary edge (101) is obtained based on the boundary edge image points (2) using photogrammetry.

4. Method according to any of the preceding claims, the method comprising the steps:
g) recording live images (5) of the section (102) and
h) superimposing the recorded live images with a boundary edge line (11) based on the obtained sequence of position coordinates (x1, y1) of the section of the boundary edge (101) and displaying the live images (5) with the superimposed boundary edge line.

5. Method according to any of the preceding claims, the method comprising the steps:
i) outputting the obtained sequence of position coordinates (x1, y1) of the section (102) of the boundary edge (101) and
j) enabling the obtained sequence of position coordinates for processing.

6. Method for operating an autonomous mobile green area maintenance robot (50) on an area (100) to be treated having a boundary edge (101),
- wherein the method comprises a method according to any of the preceding claims for identifying the boundary edge (101) and
- wherein the method comprises the step:
controlling a movement of the autonomous mobile green area maintenance robot (50) on the area (100) to be treated as a function of the obtained sequence of position coordinates (x1, y1) of the boundary edge such that the green area maintenance robot remains on the area to be treated.

7. Method according to claim 6,
- wherein the autonomous mobile green area maintenance robot (50) includes a robot camera (51),
- wherein the method comprises the step:
recording robot images of at least a portion of the area (100) to be treated using the robot camera (51), and
- wherein the method comprises:
controlling the movement of the autonomous mobile green area maintenance robot (50) on the area to be treated as a function of the recorded robot images.

8. Identifying system (20), in particular for carrying out the method according to any of claims 1 to 5, the identifying system comprising:
- an orientable camera (21), wherein the orientable camera is configured to record live images (1) and a sequence of images (1) of at least a section (102) of a boundary edge (101) of an area (100) to be treated during an orientation procedure of the camera,
- a computing unit (22), wherein the computing unit is configured to superimpose the recorded live images with a target symbol (10), to mark, in a respective image of the recorded sequence of images, an image point (2) referenced with the target symbol as a boundary edge image point, and to obtain a sequence of position coordinates (x1, y1) of the section of the boundary edge based on the boundary edge image points, and
- a display screen (23), wherein the display screen is configured to display the live images (1) with the superimposed target symbol.

9. Identifying system (20) according to claim 8,
- wherein the identifying system (20) includes a mobile identifying device, wherein the mobile identifying device comprises the orientable camera (21) and the display screen (23).

10. Identifying system (20) according to claim 8 or 9,
- wherein the identifying system (20) includes a further orientable camera and/or
- the orientable camera (21) comprises a TOF camera.

11. Green area maintenance system (30), in particular for carrying out a method according to claim 6 or 7, the green area maintenance system comprising:
- an identifying system (20) according to any of claims 8 to 10,
- an autonomous mobile green area maintenance robot (50) and
- a control unit (60), wherein the control unit is configured to control a movement of the autonomous mobile green area maintenance robot on the area (100) to be treated as a function of the obtained sequence of position coordinates (x1, y1) of the boundary edge (101) such that the green area maintenance robot remains on the area to be treated.

12. Green area maintenance system (30) according to claim 11,
- wherein the autonomous mobile green area maintenance robot (50) includes a robot camera (51), wherein the robot camera is configured to record robot images of at least a portion of the area (100) to be treated, and
- wherein the control unit (60) is configured to control the movement of the autonomous mobile green area maintenance robot on the area (100) to be treated as a function of the recorded robot images.

13. Green area maintenance system (30) according to claim 11 or 12,
- wherein the identifying system (20) includes an identification transmission unit (24), and wherein the control unit (60) includes a control transmission unit (61), wherein the identification transmission unit and the control transmission unit are configured to cooperate with each other and to transmit in a wireless manner the obtained sequence of position coordinates (x1, y1) of the boundary edge (101).

14. Green area maintenance system (30) according to any of claims 11 to 13,
- wherein the autonomous mobile green area maintenance robot (50) is a lawn mower robot including a lawn mower tool (52).

## Revendications

1. Procédé de détection d'au moins une section (102) d'un bord de délimitation (101) d'une surface à traiter (100), le procédé comprenant les étapes consistant à :
a) acquérir des images en direct (1) au moyen d'une caméra (21),
b) superposer aux images en direct acquises un symbole cible (10) et afficher les images en direct auxquelles est superposé le symbole cible (1),
c) viser la section comportant le symbole cible et guider le symbole cible le long de la section en orientant la caméra,
d) acquérir une séquence d'images (1) de la section au moyen de la caméra pendant le guidage,
e) identifier dans une image respective la séquence acquise d'images d'un point d'image (2) repéré par le symbole cible en tant que point d'image de bord de délimitation, et
f) déterminer une séquence de coordonnées de position (x1, y1) de la section du bord de délimitation sur la base des points d'image du bord de délimitation.

2. Procédé selon la revendication 1, dans lequel l'étape d) consiste à :
acquérir la séquence d'images (1) de la section (102) depuis des positions différentes (P1, P2) et/ou acquérir la séquence d'images (1) de la section avec des informations de profondeur.

3. Procédé selon la revendication 1 ou 2,
dans lequel, à l'étape f), la séquence de coordonnées de position (x1, y1) de la section (102) du bord de délimitation (101) est déterminée par photogrammétrie sur la base des points d'image de bord de délimitation (2).

4. Procédé selon l'une des revendications précédentes, dans lequel le procédé comprend les étapes consistant à : g) acquérir des images en direct (5) de ladite section (102) et
h) superposer aux images en direct acquises une ligne de bord de délimitation (11) sur la base de la séquence déterminée de coordonnées de position (x1, y1) de la section du bord de délimitation (101) et afficher les images en direct (5) auxquelles est superposée la ligne de bord de délimitation.

5. Procédé selon l'une des revendications précédentes, dans lequel le procédé comprend les étapes consistant à : i) délivrer la séquence déterminée de coordonnées de position (x1, y1) de la section (102) de bord de délimitation (101) et
j) envoyer la séquence déterminée de coordonnées de position à traiter.

6. Procédé pour faire fonctionner un robot de traitement d'espace vert autonome mobile (50) sur une surface à traiter (100) qui présente un bord de délimitation (101), dans lequel le procédé comprend un procédé selon l'une des revendications précédentes pour détecter le bord de délimitation (101) et
dans lequel le procédé comprend l'étape consistant à : commander un déplacement du robot de traitement d'espace vert autonome mobile (50) sur la surface à traiter (100) en fonction de la séquence déterminée de coordonnées de position (x1, y1) du bord de délimitation de manière à ce que le robot de traitement d'espace vert demeure sur la surface à traiter.

7. Procédé selon la revendication 6,
dans lequel le robot de traitement d'espace vert autonome mobile (50) comprend une caméra de robot (51),
dans lequel le procédé comprend l'étape consistant à :
acquérir des images de robot d'au moins une section de la surface à traiter (100) au moyen de la caméra de robot (51), et
dans lequel le procédé consiste à :
commander le déplacement du robot de traitement d'espace vert autonome mobile (50) sur la surface à traiter en fonction des images de robot acquises.

8. Système de détection (20), en particulier destiné à mettre en œuvre un procédé selon l'une des revendications 1 à 5, dans lequel le système de détection comprend :
une caméra orientable (21), dans lequel la caméra orientable est conçue pour acquérir des images en direct (1) et une séquence d'images (1) d'au moins une section (102) d'un bord de délimitation (101) d'une surface à traiter (100) pendant une orientation de la caméra,
une unité de calcul (22), dans lequel l'unité de calcul est conçue pour superposer aux images en direct acquises un symbole cible (10), pour identifier dans une image respective de la séquence acquise d'images un point d'image (2) repéré par le symbole cible en tant que point d'image de bord de délimitation et pour déterminer une séquence des coordonnées de position (x1, y1) de la section du bord de délimitation sur la base des points d'image de bord de délimitation, et
un écran (23), dans lequel l'écran est conçu pour afficher les images en direct (1) auxquelles est superposé le symbole cible.

9. Système de détection (20) selon la revendication 8, dans lequel le système de détection (20) comprend un dispositif de détection mobile, dans lequel le dispositif de détection mobile comprend la caméra orientable (21) et l'écran (23).

10. Système de détection (20) selon la revendication 8 ou 9,
dans lequel le système de détection (20) comprend une autre caméra orientable et/ou
la caméra orientable (21) comprend une caméra TOF.

11. Système de traitement d'espace vert (30), en particulier destiné à mettre en œuvre un procédé selon la revendication 6 ou 7, dans lequel le système de traitement d'espace vert comprend :
un système de détection (20) selon l'une des revendications 8 à 10,
un robot de traitement d'espace vert autonome mobile (50) et
une unité de commande (60), dans lequel l'unité de commande est conçue pour commander un déplacement du robot de traitement d'espace vert autonome mobile sur la surface à traiter (100) en fonction de la séquence déterminée de coordonnées de position (x1, y1) du bord de délimitation (101) de manière à ce que le robot de traitement d'espace vert demeure sur la surface à traiter.

12. Système de traitement d'espace vert (30) selon la revendication 11,
dans lequel le robot de traitement d'espace vert autonome mobile (50) comprend une caméra de robot (51), dans lequel la caméra de robot est conçue pour acquérir des images de robot d'au moins une section de la surface à traiter (100), et
dans lequel l'unité de commande (60) est conçue pour commander le déplacement du robot de traitement d'espace vert autonome mobile sur la surface à traiter (100) en fonction des images de robot acquises.

13. Système de traitement d'espace vert (30) selon la revendication 11 ou 12,
dans lequel le système de détection (20) comprend une unité de transmission de détection (24) et dans lequel l'unité de commande (60) comprend une unité de transmission de commande (61), dans lequel l'unité de transmission de détection et l'unité de transmission de commande sont conçues pour coopérer l'une avec l'autre et pour transmettre sans fil la séquence déterminée de coordonnées de position (x1, y1) du bord de délimitation (101) .

14. Système de traitement d'espace vert (30) selon l'une des revendications 11 à 13,
dans lequel le robot de traitement d'espace vert autonome mobile (50) est réalisé sous la forme d'un robot de tonte de pelouse équipé d'un outil de tonte de pelouse (52).
